# EUROPEAN PATENT APPLICATION

(11) **EP 4 582 245 A1**
(43) Date of publication of application: **09.07.2025**
(21) Application number: 23860018.3
(22) Date of filing: 10.08.2023
(51) Int. Cl.: B29C 70/42, A47K 13/00, C08J 5/00, C08J 5/04

(54) **RESIN MOLDING MEMBER WITH EXCELLENT SCRATCH RESISTANCE AND DURABILITY**

(30) Priority: 02.09.2022 JP 2022140057
(71) Applicant: TOTO LTD., Kokurakita-ku Kitakyushu-shi, Fukuoka 802-8601 (JP)
(72) Inventor: INOUE, Keisuke, Kitakyushu-shi, Fukuoka 802-8601 (JP); HAYASHIDA, Takeshi, Kitakyushu-shi, Fukuoka 802-8601 (JP); IWASHITA, Naoki, Kitakyushu-shi, Fukuoka 802-8601 (JP); INOUE, Seiichiro, Kitakyushu-shi, Fukuoka 802-8601 (JP); SHIMAI, Akira, Kitakyushu-shi, Fukuoka 802-8601 (JP)
(74) Representative: Bandpay & Greuter
(86) International application number: PCT/JP2023/029361
(87) International publication number: WO 2024/048253

(57) **Abstract**

A resin molded member having excellent surface scratch resistance and various properties required for a resin molded member is disclosed. The resin molded member according to the present invention comprises a crystalline resin, and a signal intensity ratio of peaks which are measured by X-ray diffraction and correspond to two main crystal planes in an outermost layer of the member is maintained up to a depth of at least 9.0 µm from the outermost layer, i.e., the outermost surface of the member. The resin molded member has excellent performance such as durability, strength, and dimensional retention in addition to scratch resistance, and can be preferably used as a so-called water-related device member.

## Description

### [Technical field]

The present invention relates to a resin molded member having excellent scratch resistance and durability, and more particularly to a resin molded member suitable for use as water-related device members, the surface of which is cleaned by scrubbing or the like.

### [Background Art]

Various molded members are formed from resin materials, and in many of these, the surfaces are cleaned by rubbing. Members that can be cleaned by such rubbing are required to be scratch-resistant against physical rubbing forces (sliding forces). In particular, the surfaces of the members that are splashed with water and then wiped off and/or that are frequently cleaned with water are required to be scratch-resistant enough to withstand the load caused by cleaning.

Methods for improving the scratch resistance of resin molded members have been proposed in the past. For example, JP2000-308601A (PLT 1) discloses a toilet seat member made of a propylene polymerization composition containing 0.05 to 5 parts by weight of a crystal nucleating agent and a resin having a crystallinity of 60% or more in the surface layer measured by reflection X-ray diffraction method, and the member is said to have excellent scratch resistance and stain resistance.

In addition, JP2021-137567A (PLT 2) discloses a water-related device member that contains a crystalline resin, has a surface hardness of B or more in pencil hardness, and has a surface roughness of 0.02 µm or more. By setting the surface hardness to B or more in pencil hardness, it is possible to suppress scratches on the surface, and by setting the surface roughness to 0.02 µm or more, it is possible to make scratches less noticeable even when the surface is scratched, since the surface has a certain degree of unevenness in advance. Furthermore, this document discloses control of the temperature of the resin and the mold in molding the resin. Specifically, it discloses that by filling a heated mold with a resin whose temperature is equal to or higher than the mold and then cooling it, it is possible to promote crystallization near the surface of the member and increase its hardness (for example, PLT 2, paragraphs 0058 and 0059).

In terms of scratch resistance, the property can be improved by increasing the crystallinity of the resin on the surface of the member, but on the other hand, as the crystallinity of the resin increases, the resin becomes more brittle and there is a possibility that dimensional changes after molding cannot be ignored. Furthermore, molded members must have sufficient properties in terms of strength and durability. From these perspectives, there is still a demand for better molded members.

### [Prior art references]

### [Patent documents]

[PLT 1] JP 2000-308601A
[PLT 2] JP 2021-137567A

### [Summary of Invention]

The present inventors have now found that by maintaining a specific crystal orientation of the resin in a resin molded member from the surface to a certain depth, a resin molded member which has excellent scratch resistance of the surface as well as various properties required for a resin molded member can be obtained. The present invention is based on this finding.

Therefore, an object of the present invention is to provide a resin molded member having excellent surface scratch resistance and various properties required of a resin molded member.

The resin molded member according to the present invention comprises a crystalline resin wherein a signal intensity ratio of peaks which are measured by X-ray diffraction and correspond to two main crystal planes in an outermost layer of the member is maintained up to a depth of at least 9.0 µm from the outermost layer.

According to the present invention, there is provided a resin molded member having excellent surface scratch resistance and various properties required for a resin molded member. The molded member according to the present invention is preferably excellent not only in scratch resistance but also in performance such as durability, strength, and dimensional retention, and can be used as a so-called water-related device member.

### [Brief Description of the Drawings]

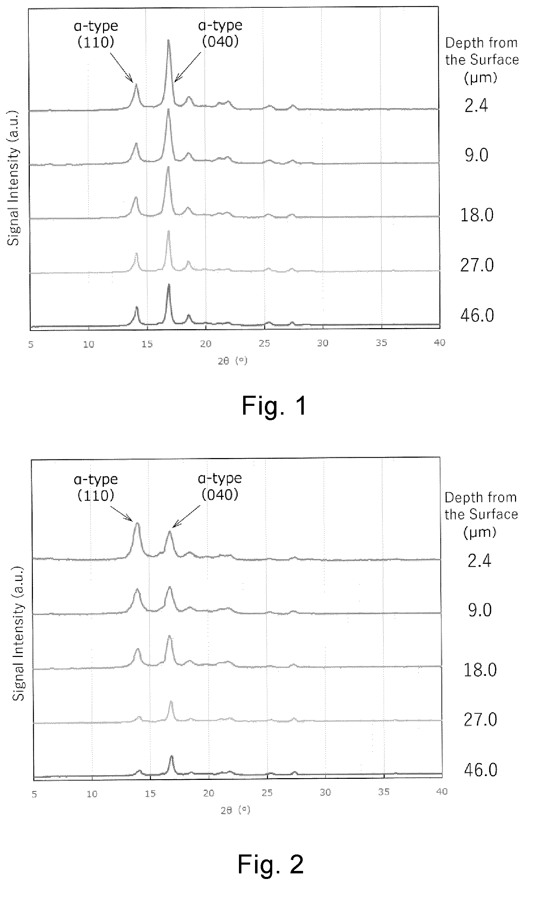

FIG. 1 is a diagram showing, at each depth, the intensities of peaks which are measured by X-ray diffraction, corresponding to the plane index (110) of the α-type crystals and a peak corresponding to the plane index (040) of the α-type crystals of the PP resin of the resin molded member of Example 1.
FIG. 2 is a a diagram showing, at each depth, the intensities of peaks which are measured by X-ray diffraction, corresponding to the plane index (110) of the α-type crystals and a peak corresponding to the plane index (040) of the α-type crystals of the PP resin of the resin molded member of Comparative Example A1.

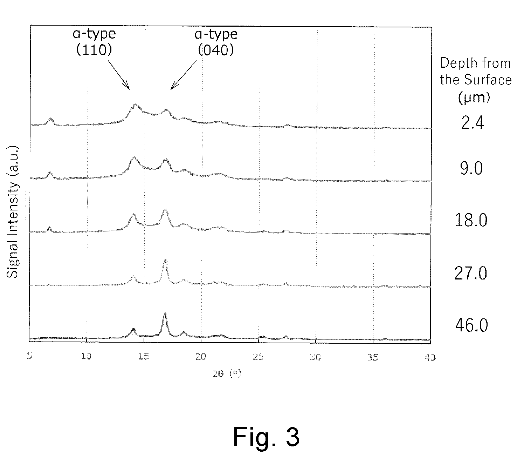

FIG. 3 is a diagram showing, at each depth, the intensities of peaks which are measured by X-ray diffraction, corresponding to the plane index (110) of the α-type crystals and a peak corresponding to the plane index (040) of the α-type crystals of the PP resin of the resin molded member of Comparative Example B1.

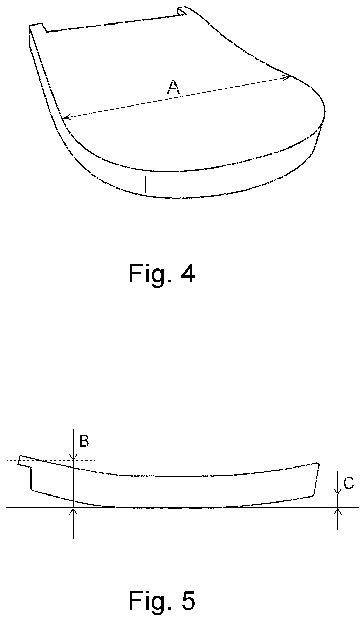

FIG. 4 is a perspective view of a lid of a toilet bowl used in a high-temperature shape retention test in the Examples, showing the measurement position of the maximum width A.
FIG. 5 is a side view of a toilet lid used in a high-temperature shape retention test in the Examples, showing the gate height B and the position of the tip warp C.

### [Detailed Description of the Invention]

### Resin molded members

The resin molded member according to the present invention contains a crystalline resin, wherein the signal intensity ratio of peaks which are measured by X-ray diffraction and correspond to the two main crystal planes in the outermost layer of the member is maintained up to a depth of at least 9.0 µm from the outermost layer.

In the present invention, the "signal intensity of the peak which corresponds to the crystal plane" means the signal intensity of the peak corresponding to a specific crystal plane of the crystalline part of the crystalline resin in the diffraction information obtained by irradiating the resin molded member with X-rays. For example, it means the intensity of the X-ray diffraction signal corresponding to the specific crystal plane observed with respect to the baseline. The ratio of the signal intensities of the peaks corresponding to the two main crystal planes observed in this manner is the "signal intensity ratio of the peaks corresponding to the two crystal planes" in the present invention. In other words, in the present invention, the "signal intensity ratio of the peaks corresponding to the two crystal planes" is an index reflecting the crystallinity of the crystalline part of the crystalline resin. Therefore, in this specification, the "signal intensity of the peak corresponding to the crystal plane" may be referred to as the "crystallinity" of the crystal plane.

In addition, since the "signal intensity ratio of the peaks corresponding to the two crystal planes" is an index reflecting the crystallinity of the crystalline portion of the crystalline resin, the "signal intensity of the peaks corresponding to the crystal planes" in the present invention can also be defined as follows. That is, the resin molded member is irradiated with X-rays, and the diffraction information obtained corresponding to one of the crystal plane indexes is defined as the value obtained as the ratio of the area of the scattering region derived from that plane index to the area of all the scattering regions. The signal intensity value of the peak corresponding to another crystal plane is obtained in the same manner, and then the ratio of the signal intensity values of the peaks corresponding to these two crystal planes is defined as the "signal intensity ratio of the peaks corresponding to the two crystal planes" in the present invention. The resin molded member according to the present invention satisfies either the signal intensity ratio based on the area ratio of the scattering regions or the signal intensity ratio of the peaks of the X-ray diffraction signal described above.

In the present invention, "peaks corresponding to two main crystal planes" refers to two peaks selected in descending order of intensity from the signal intensities of peaks corresponding to the crystal planes of the crystalline portion of the crystalline resin obtained by irradiating a resin molded member with X-rays and obtaining diffraction information. In addition, even if the size of the third or subsequent peak is the peak of which the intensity is not significantly different from that of the first or second peak and the combination of the third or subsequent peak and the first or second peak satisfies the conditions of the present invention, such resin molded member is also included in the scope of the present invention.

In the present invention, "the peak signal intensity ratio is maintained" means that the ratio is the same from the outermost surface of the member to a depth of at least 9.0 µm, and in addition, the change in the signal intensity ratio at the outermost layer to a depth of at least 9.0 µm remains within a range of about ± 35%, preferably ± 20%.

By maintaining the above signal intensity ratio from the outermost surface of the member to a depth of at least 9.0 µm, the surface of the member is provided with properties that are resistant to scratches caused by rubbing, and furthermore, the member is provided with various properties required for a resin molded member, namely, excellent strength and durability, and small dimensional change after molding.

According to a preferred embodiment of the present invention, the signal intensity ratio of the outermost layer is maintained to a depth of at least 50 µm.

In one embodiment of the present invention, when the crystalline resin is a polypropylene (PP) resin, two large peaks are observed by X-ray diffraction, one corresponding to the plane index (110) of the α-type crystals and the other corresponding to the plane index (040) of the α-type crystals. Therefore, these two peaks are regarded as peaks corresponding to the two main crystal planes by X-ray diffraction, and the signal intensity ratio between them can be utilized.

Examples of crystalline resins that can be used as the molded member according to the present invention include polypropylene (PP), polybutylene terephthalate (PBT), polyethylene (PE), polyamide (PA), polyacetal, polyoxymethylene (POM), polyethylene terephthalate (PET), polyether ether ketone (PEEK), polyphenylene sulfide (PPS), polytetrafluoroethylene (PTFE), and the like.

The molded member according to the present invention is preferably used as a water-related device member. In the present invention, the water-related device member means a member that is splashed with water and then wiped off and/or a member that is frequently cleaned with water and then wiped off. The molded member according to the present invention has excellent scratch resistance on its surface, so that the occurrence of scratches on the surface caused by the operation of wiping off water from the surface of the member is suppressed. As a result, the molded member can be used for a long period of time without impairing the design of the surface.

Specific examples of molded members according to the present invention include toilet seats; lids of a toilet bowl; case covers for warm-water washing toilet seats; resin members for remote controls; side panels for toilets; resin members for paper holders; resin members for bathroom counters, bath aprons, wash basins, and around hand-washing basins; resin members such as handles and accessory containers for kitchen storage units; and resin members for hand dryers.

According to a preferred embodiment of the present invention, the resin molded member is a toilet lid. A toilet lid has an upper surface portion exposed upward when closed and a lower surface portion exposed downward, and both surfaces are required to be scratch-resistant. Therefore, in this toilet lid, the outermost layer of the member preferably means both the upper surface portion and the lower surface portion, and it is preferable that both surfaces satisfy the conditions of the present invention.

According to another preferred embodiment of the present invention, the resin may contain additives commonly used to improve the properties of resin materials and resin molded members, such as an inorganic filler, preferably glass fiber, to increase the strength of the resin.

### Manufacturing method

The molded member according to the present invention is manufactured by a method capable of controlling the crystallization of the crystalline resin, and is preferably manufactured by the following method. The resin heated to the melting temperature is filled into a mold which is heated to a temperature in the range of the crystallization temperature of the resin ±1 0 °C., and is held in the mold for at least 20 seconds or more, and the mold is cooled to obtain a resin molded member. The crystallization temperature of the resin can be derived by the following method, for example, differential scanning calorimetry (DSC measurement). The crystalline resin is heated to a temperature above the melting point, and the resin is completely melted, and then the resin is cooled at a temperature decreasing rate of, for example, about 5 °C/min. An exothermic peak associated with crystallization is observed during the temperature decrease, and the temperature of the peak is taken as the crystallization temperature.

According to one aspect of the present invention, when the resin is a PP resin, the mold is heated to a temperature of 110°C or more and 130°C or less, and the mold is filled with the resin which is heated to a temperature equal to or higher than the temperature of the mold. According to a preferred aspect of the present invention, the temperature of the resin is 180°C to 220°C or more, and more preferably about 190°C. After the resin is filled into the mold, the mold is heated if necessary to a temperature in the range of 110°C to 130°C, and pressure is maintained for at least 20 seconds or more, preferably 40 seconds or more, and more preferably 60 seconds or less, and then the molded member is obtained after heat dissipation or cooling.

### [EXAM PLES]

The present invention will be further illustrated by the following examples, but the present invention is not limited to these examples.

### Resin material used

In the following examples and comparative examples, the following polypropylene (PP) resins were used.

### PP1 (PP100%)

PP resin with an MFR (temperature 230°C, load 2.16 kgf) of 19 g/10min conforming to JIS K-7210 was used.

### PP2 (containing 10 wt% glass fiber (GF))

PP1 was melt-kneaded with glass fiber (GF) in an amount of 10 parts by mass using an extruder to prepare resin pellets of PP2.

### PP3 (contains GF 20wt%)

PP1 was melt-kneaded with glass fiber (GF) in an amount of 20 parts by mass using an extruder to prepare resin pellets of PP3.

### PP4 (contains GF 30wt%)

PP1 was melt-kneaded with glass fiber (GF) in an amount of 30 parts by mass using an extruder to prepare resin pellets of PP4.

### Examples 1 to 4

The resin materials PP1 to PP4 were heated to 190°C and filled into a mold heated to 120°C. The temperature of the mold was then maintained at 120°C for 40 seconds, and the molded body was removed from the mold after cooling. A test piece measuring 180 mm x 180 mm x 3 mm was obtained.

### Comparative Examples A1 to A4

The resin materials PP1 to PP4 were heated to 190°C and filled into a mold heated to 160° C. The mold was cooled, 10 seconds after filing, in order to cool and harden the resin. The molded body was removed from the mold to obtain a test piece of 180 mm×180 mm×3 mm.

### Comparative Examples B1 to B4

Resin materials PP1 to PP4 were heated to 190°C and filled into a mold heated to 40°C. Heating of the mold was then stopped and after 20 seconds the molded body was removed from the mold to obtain a test piece of 180 mm x 180 mm x 3 mm.

### Crystal orientation measurement

The crystal orientation of the test pieces obtained in the examples and comparative examples was measured using the following measuring device and conditions.
Analytical equipment: Rigaku Corporation SmartLab
X-ray source: CuKα (45kV-200mA)
Optical system: Out-of-plane (angle of incidence: 0.3, 1, 2, 3, 5°)
Stage: RxRy attachment head
Detector: HyPix-3000
Scan mode: 0 dimensions
Scan speed: 3.5 degree min-1
Step width: 0.056 degree
Scan axis: 2θ
Scan range: 5-40 degree
Entrance slit box: 0.072 mm
Length limit slit: 10 mm
Receiving slit box 1: 1.0 mm
Receiving slit box 2: 1.1 mm

The X-ray incidence angle (ω) was changed from 0.3 to 5 degrees, which corresponds to an analysis depth (X-ray penetration depth) of 2.4 µm to 46.0 µm.

The crystal area and non-crystal area of a plane index were obtained from the X-ray diffraction pattern obtained at each X-ray incidence angle, and the crystallinity of the plane index was calculated using the following formula. The crystallinity of another plane index was calculated from the crystal area and non-crystal area of the other plane index. Crystallinity of plane index (%) = [(area of crystalline portion of plane index) / (area of crystalline portion + area of non-crystalline portion)] × 100

In Example 1, two large peaks were observed: one corresponding to the plane index (110) of the α-type crystals of the PP resin, which indicates crystal orientation, and the other corresponding to the plane index (040) of the α-type crystals. The depth from the surface and the crystallinity of each plane index were as shown in Figure 1. In the same manner, in Comparative Example A1 and Comparative Example B1, a peak corresponding to the plane index (110) of the α-type crystals of the PP resin and a peak corresponding to the plane index (040) of the α-type crystals were observed, and the depth from the surface and the crystallinity were as shown in Figures 2 and 3.

For Example 1, Comparative Example A1, and Comparative Example B1, the composition ratio of the crystallinity corresponding to the plane index (110) of the α-type crystals of the PP resin and the crystallinity corresponding to the plane index (040) of the α-type crystals, and the relationship with the depth were calculated. The results are shown in the table below.

**Table 1**

| Example 1 | | | | | |
|---|---|---|---|---|---|
| | Crystallinity of plane index and Ratio ((110)/(040)) | | | | |
| Depth from the Surface (µm) | 2.4 | 9.0 | 18.0 | 27.0 | 46.0 |
| (110) | 17.1 | 18.7 | 21.7 | 21.8 | 20.8 |
| (040) | 36.5 | 37.0 | 36.3 | 35.6 | 33.8 |
| Ratio | 0.47 | 0.51 | 0.60 | 0.61 | 0.62 |

### Comparative Example A1

| | Crystallinity of plane index and Ratio ((110)/(040)) | | | | |
|---|---|---|---|---|---|
| Depth from the Surface (µm) | 2.4 | 9.0 | 18.0 | 27.0 | 46.0 |
| (110) | 38.2 | 20.8 | 16.5 | 13.7 | 13.0 |
| (040) | 22.7 | 27.4 | 28.4 | 30.0 | 30.1 |
| Ratio | 1.68 | 0.76 | 0.58 | 0.46 | 0.43 |

### Comparative Example B1

| | Crystallinity of plane index and Ratio ((110)/(040)) | | | | |
|---|---|---|---|---|---|
| Depth from the Surface (µm) | 2.4 | 9.0 | 18.0 | 27.0 | 46.0 |
| (110) | 26.8 | 20.5 | 14.0 | 14.3 | 13.4 |
| (040) | 7.5 | 16.8 | 26.5 | 29.9 | 31.8 |
| Ratio | 3.60 | 1.22 | 0.53 | 0.48 | 0.42 |

### Scratch resistance evaluation 1: Pencil hardness

The pencil hardness test of the test pieces obtained in the examples and comparative examples was carried out in accordance with JIS K 5600-5-4: 1999. For pencil hardness of less than 6B not specified in JIS K 5600-5-4: 1999, the Hi-uni series manufactured by Mitsubishi Pencil Co., Ltd. was used. The results are shown in the table below.

### Scratch resistance evaluation 2: Paper sweep test

Three sheets of commercially available toilet paper were stacked and attached to a stainless steel fingernail-shaped jig, and the surface of the test piece obtained in the examples and comparative examples was swept once with this jig at a load of 100 g to 1.400 g. The Rz (µm) was measured for the swept and non-swept areas, respectively, and the difference ΔRz was calculated. If ΔRz is 0.5 or more, the difference between the swept and non-swept areas is clearly recognized as a scratch, and it can be considered that there is a scratch. The scratching speed and other conditions were performed in accordance with JIS K 5600-5-4:1999. The results were as shown in the table below.

**Table 2**

| | Pencil Hardness | Paper Sweep Test (ΔRz) | | | | | |
|---|---|---|---|---|---|---|---|
| | | 100g | 300g | 500g | 700g | 1,000g | 1.400g |
| Example 1 | 2B | -*1 | -*1 | 0.27 | 0.23 | 0.43 | 0.52 |
| Example 2 (GF10wt%) | F | -*1 | -*1 | -0.01 | -0.10 | 0.25 | 0.52 |
| Comparative Example B1 | 7B | 0 | 0.51 | 0.90 | -*2 | -*2 | -*2 |
| Comparative Example B2 (GF10wt%) | 4B | 0 | 0.25 | 0.74 | 0.93 | 0.80 | 1.39 |

In the table, -*1: the test was not performed, and -*2: the test was not performed because obvious scratches were recognized by visual inspection.

### Tensile Strength Test

The tensile strength of the test pieces obtained in the examples and comparative examples was measured using the following measuring device and conditions.
Testing machine: Autograph AG-X plus (Shimadzu Corporation)
Test temperature: Room temperature, Test piece: JIS K7139 Type A1
Pulling speed: 50mm/min, chuck distance: 115mm

When a load was applied, the strength increased and the value indicating the maximum stress was taken as the tensile strength. The results are shown in the table below.

**Table 3**

| | Tensile Strength (MPa) |
|---|---|
| Example 1 | 35.6 |
| Example2 (GF 10 wt%) | 47.0 |
| Example3 (GF 20 wt%) | 68.3 |
| Example4 (GF 30 wt%) | 78.5 |
| Comparative Example A1 | 33.6 |
| Comparative Example B1 | 32.1 |
| Comparative Example B2 (GF 10 wt%) | 42.9 |
| Comparative Example B3 (GF 20w t%) | 66.7 |
| Comparative Example B4 (GF 30 wt%) | 74.9 |

### High temperature shape retention test

A toilet lid sample with the shape shown in Figure 1 was manufactured using PP2 under manufacturing conditions similar to those of Example 2 and Comparative Example A2. The shape retention of this sample at high temperatures was evaluated in the following manner, assuming storage (transportation) at high temperatures. First, the maximum width A, gate height B, and tip warpage C shown in Figures 1 and 2 were measured for the sample in a room temperature environment (23±1°C). The sample was then stored in a thermostatic chamber at 50°C, during which the sample was removed after 48 hours, 96 hours, and 240 hours, and the dimensions of the above three points were measured. The sample was placed vertically in the thermostatic chamber. The results, shown in mm as the amount of change from the initial measurement, are as shown in the table below.

**Table 4**

| Results of Example 2 (change from the initial, mm) | | | | |
|---|---|---|---|---|
| | Initial | 48 hours | 96 hours | 240 hours |
| Maximum width | 0 | -0.34 | -0.36 | -1.13 |
| Gate height | 0 | 0.68 | 0.62 | 0.77 |
| Tip warpage | 0 | 0.16 | 0.05 | 0.13 |

### Results of Comparative Example A2 (change from the initial mm

| | Initial | 48 hours | 96 hours | 240 hours |
|---|---|---|---|---|
| Maximum width | 0 | -2.52 | -2.68 | -2.68 |
| Gate height | 0 | -2.22 | -2.42 | -2.46 |
| Tip warpage | 0 | 0.27 | 0.24 | 0.39 |

## Claims

1. A resin molded member comprising a crystalline resin,
wherein a signal intensity ratio of peaks which are measured by X-ray diffraction and correspond to two main crystal planes in an outermost layer of the member is maintained up to a depth of at least 9.0 µm from the outermost layer.

2. The resin molded member according to claim 1, wherein the signal intensity ratio of the outermost layer is maintained to a depth of at least 50 µm.

3. The resin molded member according to claim 1 or 2, which is a water-related device member.

4. The resin molded member according to any one of claims 1 to 3, wherein the crystalline resin is polypropylene (PP), polybutylene terephthalate (PBT), polyethylene (PE), polyamide (PA), polyacetal, polyoxymethylene (POM), polyethylene terephthalate (PET), polyether ether ketone (PEEK), polyphenylene sulfide (PPS), or polytetrafluoroethylene (PTFE).

5. The resin molded member according to any one of claims 1 to 4, wherein the crystalline resin is polypropylene.

6. The resin molded member according to any one of claims 1 to 5, further comprising glass fibers.

7. The resin molded member according to any one of claims 1 to 7, which is a lid for a toilet bowl, wherein on both the lid upper surface portion exposed upward when the lid is closed and the lid lower surface portion exposed downward, the signal intensity ratio of peaks which are measured by X-ray diffraction and correspond to two main crystal planes in an outermost layer of the member is maintained up to a depth of at least 9.0 µm from the outermost layer.

8. A method for producing a resin molded member according to any one of claims 1 to 7, comprising the steps of:
heating a mold to a temperature in the range of crystallization temperature of the resin ±10 °C,
filling the mold with the resin that has been heated to a temperature equal to or higher than the temperature of the mold,
maintaining the temperature of the mold within a range of the crystallization temperature of the resin ±10°C for at least 20 seconds, and then cooing the mold, and
obtaining a resin molded member from the mold.
